# EUROPÄISCHE PATENTSCHRIFT

(11) **EP 2 454 177 B1**
(45) Veröffentlichungstag und Bekanntmachung des Hinweises auf die Patenterteilung: **15.01.2014**
(21) Anmeldenummer: 10735196.7
(22) Anmeldetag: 06.07.2010
(51) Int. Cl.: B65G 1/137, B65G 65/00

(54) **VERFAHREN UND BELADESYSTEM ZUM KOMMISSIONIEREN VON ARTIKELN AUF ZIEL-LADUNGSTRÄGER**
METHOD AND LOADING SYSTEM FOR ORDER-PICKING ARTICLES ONTO DESTINATION LOAD CARRIERS
PROCÉDÉ ET SYSTÈME DE CHARGEMENT POUR PRÉPARER DES COMMANDES D'ARTICLES SUR DES SUPPORTS DE CHARGEMENT CIBLES

(30) Priorität: 17.07.2009 DE 102009033687
(43) Veröffentlichungstag der Anmeldung: 23.05.2012
(73) Patentinhaber: Knapp AG, 8075 Hart bei Graz (AT)
(72) Erfinder: KÜSSNER, Martin, A-8430 Leibnitz (AT)
(74) Vertreter: Hanke, Hilmar
(86) Internationale Anmeldenummer: PCT/EP2010/004069
(87) Internationale Veröffentlichungsnummer: WO 2011/006597

(56) Entgegenhaltungen:
- EP-A2- 2 154 088
- DE-A1- 3 814 101
- DE-A1-102006 025 617
- DE-A1-102006 025 619
- DE-U1-202009 009 773
- GB-A- 2 017 664

## Beschreibung

Die Erfindung betrifft ein Verfahren und ein Beladesystem zum Kommissionieren von Artikeln in Form von Einzelartikeln und/ oder Packungseinheiten (Colli, etc.), bei dem angeförderte Artikel gemäß den Kommissionieraufträgen auf Ziel-Ladungsträger gepackt und versandt werden.

Bei beispielsweise aus US-PS 4 189 273 oder WO 2007/134832 A2 bekannten Beladesystemen der vorgenannten Art wird der Ziel-Ladungsträger, insbesondere in Form eines Rollcontainers, beladen, indem die Artikel in einem Schacht gestapelt werden, in dem sich der Ziel-Ladungsträger auf einer Hubeinrichtung befindet. Die Oberseite des ortsfesten Schachts befindet sich auf einer ortsfesten großflächigen Arbeitsbühne. Der Ziel-Ladungsträger wird auf einer Fördertechnik unterhalb der Arbeitsbühne, die der Kommissionierplatz des oder der Kommissionierer ist, zugeführt, und nach einem Beladen auf einer gleichgearteten Fördertechnik dem Versand zugeführt. Von Nachteil ist, dass die Rollcontainer und dergleichen auf einer speziellen aufwändigen Fördertechnik bis in die Kommissionierstation angefördert werden müssen, bevor diese mit Artikeln beladen und auf der speziellen aufwändigen Fördertechnik wieder zurück in den Versand gefördert werden. Von Nachteil ferner ist, dass im Beladesystem grundsätzlich eine große Anzahl an Rollcontainern eingebunden sind, und zwar nicht nur auf der vorgenannten aufwändigen Fördertechnik im Verlauf eines An- und Abförderns über weite Strecken, sondern auch während eines doch zeitaufwändigen Beladens an jeder der vielen Beladestellen des Systems.

DE 38 14 101 A1 beschreibt ein Verfahren entsprechend dem Oberbegriff von Anspruch 1, sowie ein Beladesystem entsprechend dem Oberbegriff von Anspruch 7.

Aufgabe der Erfindung ist die Schaffung eines Verfahrens und eines Beladesystems der eingangs genannten Art, das bei effektiver Kommissionierung mit einfachen Mitteln vergleichsweise wenige Ziel-Ladungsträger in das Gesamtsystem einbindet und insbesondere ein schnelles Beladen der Ziel-Ladungsträger ermöglicht.

Gelöst wird die der Erfindung zugrundeliegende Aufgabe durch ein Verfahren mit den Merkmalen nach Anspruch 1, vorteilhaft weitergebildet durch die Merkmale nach den Ansprüchen 2 bis 6, sowie durch ein Beladesystem mit den Merkmalen nach Anspruch 7, vorteilhaft weitergebildet durch die Merkmale nach den Ansprüchen 10 bis 15.

Wesen des Verfahrens gemäß der Erfindung ist, dass die zu kommissionierenden angeförderten Artikel in zumindest einer Kommissionierstation auf angeförderten transportablen Hilfs-Ladungsträgern, die jeweils für einen Kommissionierauftrag oder einen Teil eines Kommissionierauftrags vorgesehen sind, bereits in dem Schlichtmuster des Ziel-Ladungsträgers ange-ordnet und/oder gestapelt werden, und der Hilfs- Ladungsträger nebst Artikelmenge aus Lagen und/oder Stapel(n) zu einer Beladestation gefördert wird, in der die Artikelmenge als Einheit auf einen bereitgestellten positionierten Ziel- La-dungsträger automatisch umgeladen wird, wobei vorzugsweise Rollcontainer und Paletten als Ziel-Ladungsträger verwendet werden. Hierbei finden speziell Rollcontainer mit zwei entgegengesetzten, zueinander parallelen Seitenwänden Verwendung, die bei einer Förderung auf der Fördertechnik seitlich liegen und bevorzugt Gitterstruktur besitzen.

Insbesondere werden die Hilfs-Ladungsträger nach einem Entladen für ein erneutes Beladen auf einer rückführenden Fördertechnik in die Kommissionierstation automatisch zurückgefördert.

In der Beladestation wird erfindungsgemäß der auf einer zuführenden Fördertechnik angeförderte Hilfs-Ladungsträger nebst aufgenommener Artikelmenge an einer Umladestelle unterseitig untergriffen und in eine hängende Position in einer definierten Überführungsrichtung überführt und positioniert, und der Boden eines bereitgestellten Ziel-Ladungsträgers an die Unterseite des hängenden Hilfs-Ladungsträgers angehoben. Dann wird mittels seitlicher Verschiebung des Bodens des hängenden Hilfs-Ladungsträgers in Überführungsrichtung die Artikelmenge auf den Ziel-Ladungsträger übergeben, worauf der Ziel-La-dungsträger zusammen mit der übernommenen Artikelmenge unter Trennung vom Hilfs-Ladungsträger nach unten in eine Abförderstellung bewegt und auf einer abfördernden Fördertechnik dem Versand zugeführt wird.

Der untergriffene Hilfs-Ladungsträger nebst Artikelmenge wird insbesondere an der Umladestelle abgehoben und in Überführungsrichtung horizontal bis zu einem seitlichen Anschlag versetzt und durch Absenken ortsfest eingehängt und am seitlichen Anschlag positioniert.

Für eine Übergabe der Artikelmenge auf den Ziel-Ladungsträger wird der untergriffene Boden des ortsfest eingehängten Hilfs-Ladungsträgers nach unten aus dem eigentlichen Hilfs-La-dungsträgers herausbewegt und in Überführungsrichtung seitlich verschoben, und nach Übergabe der Artikelmenge auf den Ziel-Ladungsträger und Trennung des Hilfs-Ladungsträgers vom Ziel-Ladungsträger durch dessen Abwärtsbewegung der Boden entsprechend der Herausbewegung wieder zurück-versetzt.

Es kann der leere ortsfest eingehängte Hilfs-Ladungsträger auf die Umladestelle nach Art der Überführung in Überführungsrichtung für eine Rückförderung auf der rückführenden Fördertechnik zur Kommissionierstation rück-überführt werden.

Der Kommissionierstation werden vorzugsweise sowohl vereinzelte Artikel in Form von Langsamdrehern auf erhöhten Stichbahnen als auch Artikel auf höhenverstellbaren Paletten in Form von Schnelldrehern auf einem Kommissionierfahrzeug zugeführt, wobei die vereinzelten Artikel und die Artikel von den Paletten etwa auf gleichem Höhenniveau der einzelnen Artikel von einem auf dem Kommissionierfahrzeug erhöht platzierten Kommissionierer auf bereitgestellte Hilfs-Ladungsträger etwa auf dem gleichem Höhenniveau umgeladen werden.

Das Kommissionierfahrzeug wird mit vorzugsweise zwei Artikel-Paletten auf verstellbaren Hubtischen automatisch beladen, wobei die Artikel-Paletten vorzugsweise aus einem Palettenregallager angefördert werden.

Ein Beladesystem gemäß der Erfindung ist insbesondere gekennzeichnet durch
- zumindest eine Kommissionierstation für das Kommissionieren von angeförderten Artikeln auf bereitgestellten transportablen Hilfs-Ladungsträgern, die jeweils für einen Kommissionierauftrag oder einen Teil eines Kommissionierauftrags vorgesehen sind,
- zumindest eine Beladestation für eine automatische Übergabe einer kommissionierten Artikelmenge als Einheit vom Hilfs-Ladungsträger auf den Ziel-Ladungsträger, sowie
- eine zuführende Förderstrecke von der Kommissionierstation zur Beladestation für den automatischen Transport von Hilfs-Ladungsträgern mit einer in Lagen angeordneten und/oder gestapelten Artikelmenge, und
- eine rückführende Förderstrecke von der Beladestation zur Kommissionierstation für den automatischen Rück-Transport von Hilfs-Ladungsträgern ohne Artikelmenge für eine erneute Kommissionierung.

Der Hilfs-Ladungsträger ist insbesondere ein vertikaler, oben und unten offener Schacht vorzugsweise mit geschlossener Umfangswandung, in dem ein höhenverstellbarer Boden für ein manuelles Einlegen von kommissionierten Artikeln von oben in Lagen und/oder in Stapel(n) vorgesehen ist, wobei der Boden in einer Tiefstellung für eine Freigabe der Artikelmenge aus dem Schacht seitlich aus dem Schacht herausschiebbar und nach der Entleerung der Artikelmenge wieder rückstellbar ist.

Die Kommissionierstation weist zwei beabstandete Reihen an Stellplätzen für angeförderte und/oder rückgeförderte leere Hilfs-Ladungsträger auf, wobei in der Gasse der Stellplätze ein Kommissionierfahrzeug mit Kommissionierer verfahrbar ist, auf dem vorzugsweise zwei aufgenommene höhenverstellbare Artikel-Paletten, nämlich Schnelldreher, zu den Stellplätzen verfahrbar sind, deren Artikel durch den Kommissionierer auf Hilfs-Ladungsträger kommissionierbar sind, die auf den Stellplätzen abgestellt sind.

Die Artikel-Paletten sind auf höhenverstellbaren Hubtischen angeordnet sind, zwischen denen der Kommissionierer in einer erhöhten Position auf dem Kommissionierfahrzeug kommissioniert.

Das Kommissionierfahrzeug kann aus der Gasse der Stellplätze heraus verfahren werden, um vorzugsweise zwei Artikel- Paletten von einer Artikel-Paletten-Zuführstrecke automatisch zu übernehmen und um leere oder teil-kommissionierte Paletten auf einer Paletten-Abführstrecke automatisch abzugeben.

Die Kommissionierstation besitzt insbesondere Stichbahnen senkrecht zur Stellplatz-Gasse, auf denen vereinzelte Artikel in Form von Langsamdrehern zwischen zwei Stellplätzen bis zur Stellplatz-Gasse etwa auf dem Niveau des oberen Endes eines Hilfs-Ladungsträgers zuführbar und einem Kommissionierer auf dem Kommissionierfahrzeug für ein manuelles Kommissionieren auf den oder in den Hilfs-Ladungsträger zugänglich ist, der vorzugsweise auf einem der Stichbahn benachbarten Stellplatz abgestellt ist.

Für kurze Förderstrecken des Ziel-Ladungsträgers zum Endverbraucher ist die Beladestation des Ziel-Ladungsträgers insbesondere im Warenausgangsbereich, vorzugsweise in der Versandstation, angeordnet.

Die Ziel-Ladungsträger sind insbesondere Paletten oder Container, vorzugsweise Rollcontainer, die zwei bis vier Seitenwände besitzen. Sind vier Seitenwände vorgesehen, ist zumindest eine Seitenwand herausnehmbar oder nach unten umklappbar, um den verschieblichen Boden des Hilfs-Ladungsträgers aus dem eigentlichen Hilfs-Ladungsträger für eine Übergabe einer Artikelmenge auf den Boden des Containers herausschieben zu können.

Die Beladestation des Beladesystem kennzeichnet sich insbesondere durch
- eine Greif- und Verschiebeeinheit mit einem gabelförmigen Lastaufnahmemittel zum Untergreifen, Überführen und Positionieren eines auf der zuführenden Förderstrecke angeförderten Hilfs-Ladungsträgers nebst aufgenommener Artikelmenge von einer Umladestelle der Förderstrecke in eine hängende Position, sowie zur Rückführung eines entleerten Hilfs-Ladungsträgers auf gleichem Weg zur Umladestelle für eine Abförderung zur Kommissionierstation auf der rückführenden Förderstrecke,
- eine Halteeinheit zum oberseitigen Halten des überführten Hilfs-Ladungsträgers nebst Artikelmenge in der hängenden Position,
- einen Lift zum Anheben und Positionieren eines bereitgestellten leeren Ziel-Ladungsträgers an die Unterseite des hängenden Hilfs-Ladungsträgers, und
- eine Rückhaltevorrichtung für einen seitlichen Anschlag und ein Positionieren eines Hilfs-Ladungsträgers nebst Artikelmenge bei einem seitlichen Verschieben oder Entfernen des Bodens des Hilfs-Ladungsträgers für eine Übergabe der Artikelmenge als Einheit auf den positionierten angehobenen Ziel-Ladungsträger.

Durch die Erfindung kann die Anzahl der Beladestationen des Gesamtsystems reduziert werden. Beladestationen sind bei bestehenden Systemen störanfällig, insbesondere bei Verwendung von Rollcontainern als Ziel-Ladungsträger, da diese vorzugsweise mit zwei "wackligen" Seitenwänden ausgeführt sind, oftmals verklemmen, und ein manueller Eingriff notwendig wird, um die Störung zu beheben. Durch die Reduzierung der Anzahl der Beladestationen wird damit die Anzahl der Stellen, an denen Fehler auftreten können, reduziert. Wartungspersonal muss nur in einem kleinen Bereich zur Behebung von Fehlern zur Verfügung stehen. Dadurch reduzieren sich die Wegzeiten des Wartungspersonals und damit die Ausfallzeiten durch den Ausfall einer Beladestation.

Das erfindungsgemäße Beladesystem eignet sich insbesondere für den Lebensmittelhandel, mit dessen Hilfe die Filialen einer Supermarktkette beliefert werden.

Das Beladesystem ermöglicht das Kommissionieren von Artikeln, die auf Wareneingangs-Ladungsträgern in Form von Paletten, etc. angeliefert werden und auf Ziel-Ladungsträgern in Form von Rollcontainern, Paletten, etc. versandt werden.

Zur Kommissionierung werden Artikel von Lagerorten im Lager (Palettenregal, Regallager) zu Kommissionierplätzen transportiert.

Am Kommissionierplatz belädt ein Kommissionierer bzw. Lagerarbeiter einen Hilfs-Ladungsträger mit Artikeln gemäss einem Kommissionierauftrag. Dabei werden Artikel entweder vereinzelt oder auf Wareneingangs-Ladungsträgern (Palette)am Kommissionierplatz bereit gestellt.

Sobald der Hilfs-Ladungsträger gemäss einem Kommissionierauftrag beladen ist, wird dieser vom Kommissionierplatz zu einer Beladestation, insbesondere Rollcontainer-Beladestation transportiert.

In der Rollcontainer-Beladestation wird der Artikel-Stapel vom Hilfs-Ladungsträger auf den Rollcontainer übergeben. Der Hilfs-Ladungsträger wird wieder zu den Kommissionierstationen zurückgeführt. Der Rollcontainer wird für die Auslieferung der Artikel in den Versand weiter transportiert.

Im System wird an der Kommissionierstation ein Hilfs-Ladungsträger beladen. Dadurch unterscheidet sich das System vom eingangs genannten Stand der Technik. Bei den bekannten Systemen wird nämlich der Ziel-Ladungsträger (Palette, Rollcontainer, etc.) direkt beladen, indem Artikel in einem Schacht gestapelt werden, in dem sich der Ziel-Ladungsträger auf einer Hubeinrichtung befindet.

Außerdem befindet sich bei den bekannten Systemen der Kommissionierplatz auf einer ortsfesten Bühne. Im erfindungsgemäßen System befindet sich der Kommissionierplatz auf einem Fahrzeug.

Durch die Verwendung des Fahrzeuges werden
- Wegzeiten vermieden, die durch die Aufteilung der Artikel auf die Ziel-Ladungsträger entstehen würden, wenn die Palette ortsfest zur Verfügung gestellt wird und die Artikel vom Lagerarbeiter auf die einzelnen Hilfs-Ladungsträger verteilt werden müssen.
- Durch die Platzierung des Kommissionierplatzes am Fahrzeug kann der Kommissionierplatz, was die Grund-fläche betrifft, auf einem kleinen Raum aufgebaut werden.

Die erfindungsgemäße Trennung von Kommissionierplatz und Beladestation
- Reduziert die Anzahl der benötigten Rollcontainer-Beladestationen.

Die Verwendung des Fahrzeuges am Kommissionierplatz reduziert Wegzeiten beim Umladen von Artikeln von Wareneingangs-Ladungsträgern auf Hilfs-Ladungsträgern beim Kommissioniervorgang.

Weitere Vorteile und Einzelheiten der Erfindung werden nachfolgend anhand eines Ausführungsbeispiels unter Bezugnahme auf die beigefügten Zeichnungen näher beschrieben; es zeigen:
- Figur 1: ein Beladesystem gemäß der Erfindung mit Kommissionierstationen für Hilfs-Ladungsträger und einer Rollcontainer-Beladestation in schematischer Draufsicht,
- Figur 2: eine Kommissionierstation mit Hilfs-Ladungsträgern im Schnitt A-A der Figur 1,
- Figur 3: einen Hilfs-Ladungsträger gemäß Figur 2 mit einem höhenverstellbaren Boden in drei Stellungen, und
- Figuren 4 und 5: die Rollcontainer-Beladestation der Figur 1 in zwei Beladestellungen.

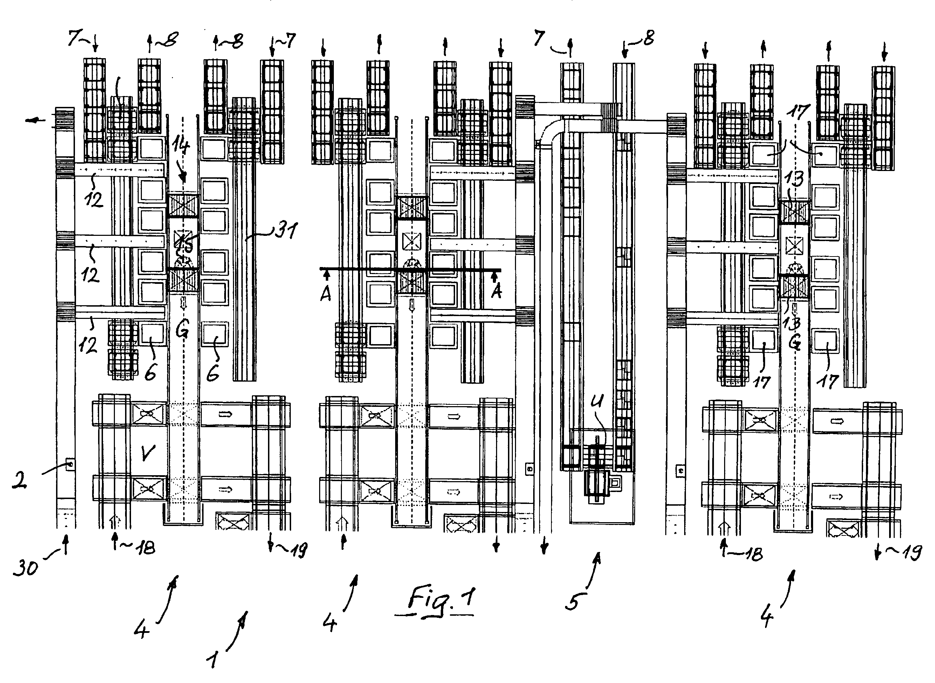

In Figur 1 ist ein Ausschnitt aus dem Kommissionierbereich eines Lagers gezeigt. Der Ausschnitt umfasst drei Kommissionierstationen 4 zum manuellen Kommissionieren von Artikeln 2 in Hilfs-Ladungsträger 6 und eine Beladestation 5 zum automatischen Beladen von Ziel-Ladungsträgern 3 in Form von Rollcontainern.

Jede Kommissionierstation 4 besitzt eine zuführende Fördertechnik 18 für Artikel 2, die zur Kommissionierung auf Wareneingangs-Ladungsträgern in Form von Paletten 13 bereitgestellt werden, und eine zuführende Fördertechnik 30 für Artikel 2, die vereinzelt in der Kommissionierstation 4 bereitgestellt werden.

An jedem Kommissionierplatz bzw. jeder Kommissionierstation 4 befindet sich ein Kommissionierfahrzeug 14, das zwei Stellplätze hat, auf denen Artikel 2, die auf Paletten 13 gelagert sind, aufgenommen werden.

Am Kommissionierplatz befinden sich zwölf Stellplätze 17 für Hilfs-Ladungsträger 6 für die Aufnahme von Artikeln 2 beim Kommissioniervorgang unter Bildung einer Gasse G für ein Kommissionierfahrzeug 14.

Außerdem befindet sich im Bereich des Kommissionierplatzes eine Fördertechnik 31 für die Bereitstellung und den Abtransport von Hilfs-Ladungsträgern 6 mit einem Querverfahrswagen 32 mit zwei Stellplätzen.

Von einem Lagerort, insbesondere einem nicht veranschaulichten Palettenregallager L, werden Artikel 2 auf Wareneingangs-Ladungsträgern bzw. zwei Paletten 13 über die Fördertechnik 18 zum Kommissionierplatz transportiert. An der Übergabestelle V werden diese auf die beiden Stellplätze des Kommissionierfahrzeugs 14 automatisch übergeben.

Nach dem Kommissioniervorgang werden die Wareneingangs-Ladungsträger am Übergabeplatz V wieder auf die abführende Fördertechnik 19 übergeben.

Nach der Übergabe der Wareneingangs-Ladungsträger auf das Kommissionierfahrzeug 14 bewegt sich das Fahrzeug in der Gasse G entlang der bereitgestellten Hilfs-Ladungsträger 6. Ein Lagerarbeiter bzw. Kommissionierer 15 entnimmt die Arti-kel 2 vom Wareneingangs-Ladungsträger und übergibt sie auf die Hilfs-Ladungsträger 6. Der Arbeitsplatz des Lagerarbei-ters befindet sich auf dem Kommissionierfahrzeug 14.

Zusätzlich zu der Entnahme von Artikeln von den Wareneingangs-Ladungsträgern, die sich am Fahrzeug befinden, entnimmt der Lagerarbeiter auch Artikel 2 von den Rampen bzw. Stichbahnen 12 der zuführenden Fördertechnik 30 für Artikel 2 und gibt diese in den Hilfs-Ladungsträger 6.

Nachdem entweder ein Hilfs-Ladungsträger 6 vollständig beladen ist oder der Kommissionierauftrag abgeschlossen ist, wird der beladenen Hilfs-Ladungsträger 6 auf den Querverfahrswagen 32 überführt und ein leerer Hilfs-Ladungsträger 6 wieder bereitgestellt. Der Hilfs-Ladungsträger 6 wird danach zur Rollcontainer-Beladestation 5 transportiert.

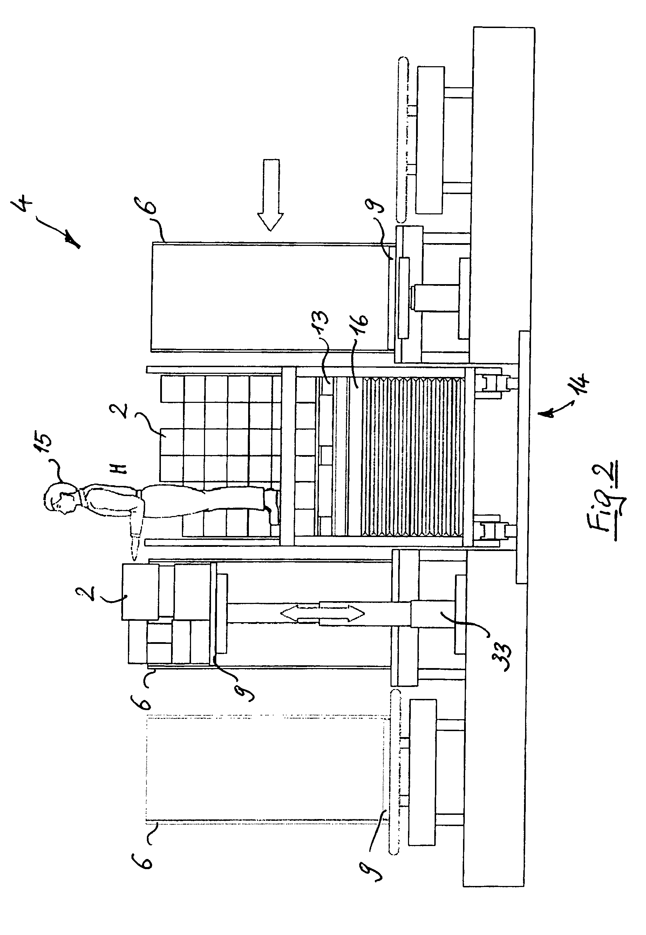

Figur 2 zeigt den Schnitt A-A am Kommissionierplatz. Es zeigt einen Hilfs-Ladungsträger 6 an der rechten Seite, der leer ist und soeben über die Fördertechnik 7 für Hilfs-Ladungsträger 6 bereitgestellt wurde.

An der linken Seite ist ein Hilfs-Ladungsträger 6 dargestellt, der teilweise mit Artikeln 2 vom Lagerarbeiter beladen wurde.

Im Schnitt A-A wird das Kommissionierfahrzeug 13 veranschaulicht, auf dem ein Wareneingangs-Ladungsträger bzw. eine Palette 13 abgestellt ist und auf dem sich der Arbeitsplatz des Lagerarbeiters bzw. Kommissionierers 15 befindet.

Um dem Lagerarbeiter ein ergonomisches Arbeiten auf einem erhöhten Niveau H zu ermöglichen, ist der Wareneingangs-Ladungsträger auf einem Hubtisch 16 abgestellt. Nachdem Lage für Lage von Artikeln 2 vom Wareneingangs-Ladungsträger entnommen wurde, wird dieser durch den Hubtisch 16 angehoben. Ebenso wird der Boden 9 des Hilfs-Ladungsträgers 6 durch einen Lift 33 angehoben und abgesenkt.

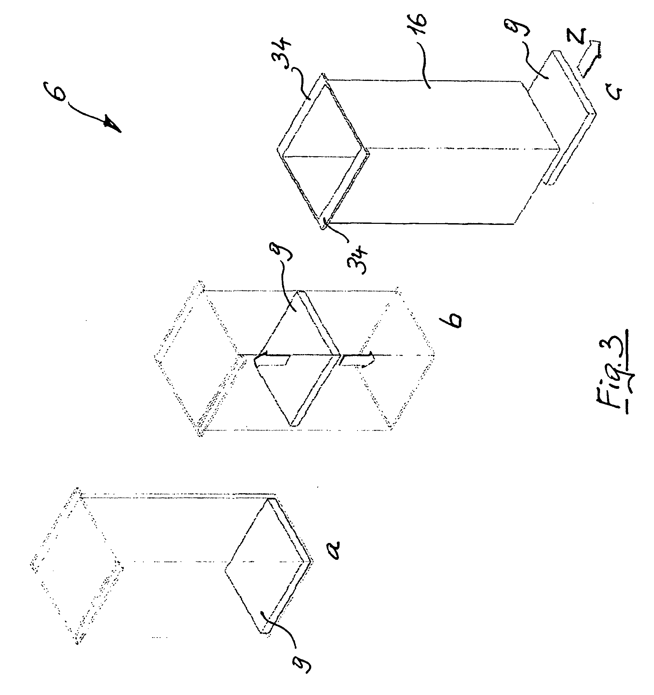

Figur 3 zeigt den Hilfs-Ladungsträger 6 mit dem Boden 9 in drei Stellungen a, b und c. Der Hilfs-Ladungsträger 6 besitzt neben dem höhenverstellbaren und unten seitlich versetzbaren Boden 9, der als Stellfläche für Artikel 2 dient, eine Umfangswand 16.

Der Boden 9 dient zum sicheren Transport des Hilfs-Ladungsträgers 6 auf der Fördertechnik 7 und als Stellfläche für Artikel.

Die Umfangswand 16 des Hilfs-Ladungsträgers 6 ist an allen Seiten geschlossen und bildet einen oben und unten offenen Vertikalschacht. Das ermöglicht die Bildung eines Artikel-Stapels.

Die Umfangswand ist an der oberen Seite mit einem Profil 34 versehen, so dass der Hilfs-Ladungsträger 6 in einer Halteeinheit 22 beim Beladen des Rollcontainers in der Rollcontainer-Beladestation 5 eingehängt werden kann.

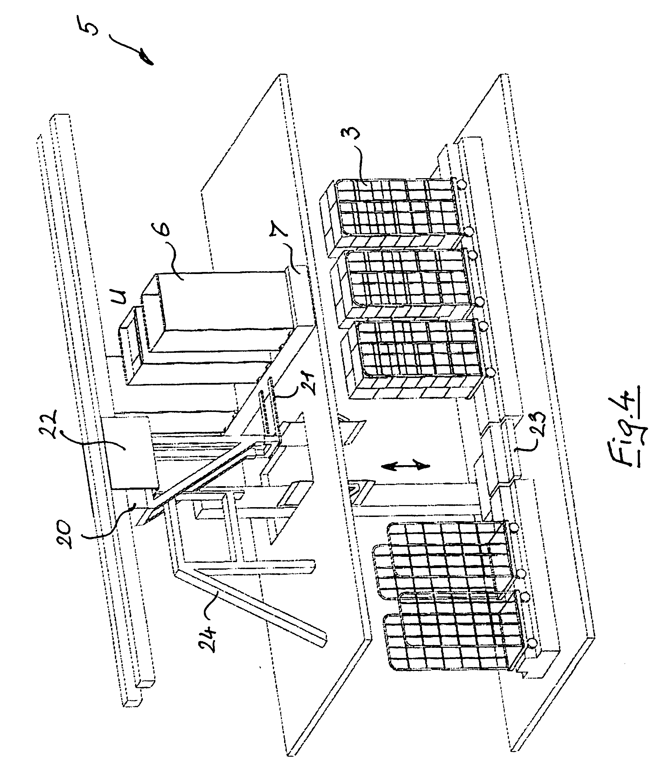

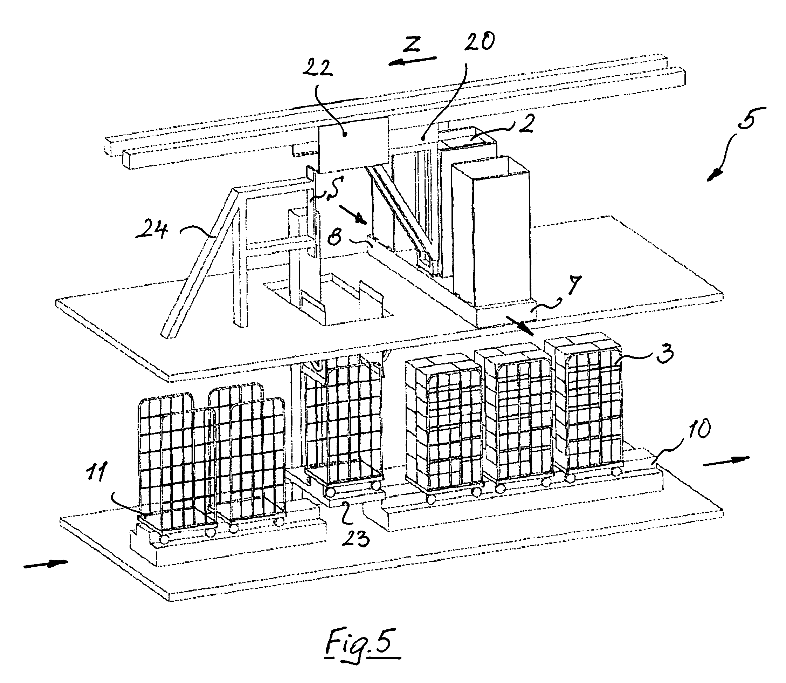

Die Figuren 4 und 5 zeigen die Rollcontainer-Beladestation 5. Auf einer unteren Ebene werden die Ziel-Ladungsträger 3, nämlich die leeren Rollcontainer bereitgestellt. Auf einer oberen Ebene werden die mit Artikeln beladenen Hilfs-Ladungsträger 6 der zuführenden Förderstrecke 8 bereitgestellt.

Die Beladestation 5 umfasst eine Greif- und Verschiebeeinheit 20, die vorgenannten Halteeinheit 22, eine Rückhaltevorrichtung 24 sowie einen Lift 23.

Mit Hilfe der Greif- und Verschiebeeinheit 20 wird der Hilfs-Ladungsträger 6 von der zuführenden Fördertechnik 8 in eine Übergabeposition bzw. zu einer Umladestelle U gebracht.

Dazu besitzt die Greif- und Verschiebeeinheit 20 ein gabelförmiges Lastaufnahmemittel 21, auf das der Hilfs-Ladungsträger 6 übernommen wird. Das Lastaufnamemittel 21 unterfährt den Boden 9 des Hilfs-Ladungsträgers 6, um ihn aufzunehmen. Das Lastaufnahmemittel 21 ist außerdem vertikal verfahrbar, um den Hilfs-Ladungsträger 6 von der Fördertechnik 8 zu heben.

Die Greif- und Verschiebeeinheit 20 ist horizontal verfahrbar, um den Hilfs-Ladungsträger in eine Übergabeposition mit Anschlag S an der Rückhaltevorrichtung 24 zu bringen. Gleichzeitig mit der Aufnahme des Hilfs-Ladungsträgers 6 wird der Ziel-Ladungsträger 3 auf die Plattform des Lifts 23 gestellt, um auch diesen in die Übergabeposition zu bringen.

Der Hilfs-Ladungsträger 6 wird an der Halteeinheit 20 durch Absenken in seiner Anschlagstellung S eingehängt.

Der Lift 23 hebt den leeren Ziel-Ladungsträger 3 an, bis sich dessen Boden 11 direkt unter dem Boden 9 des Hilfs-Ladungsträgers gemäß Figur 3a befindet. Die beiden Vertikalwände des Ziel-Ladungsträgers 3 befinden sich dabei außerhalb der Wände des Hilfs-Ladungsträgers 6.

Danach wird der Boden 9 des Hilfs-Ladungsträgers 6 gemäß Figur 3c entfernt. Dazu wird die Greif- und Verschiebeeinheit 20 weiter in Überführungsrichtung Z gemäß den Figuren 4 und 5 nach links verschoben. Der Artikel-Stapel rutscht dabei vom Boden 9 des Hilfs-Ladungsträgers 6 auf den Boden 11 des Ziel-Ladungsträgers 3.

Nach dem Entfernen des Bodens 9 des Hilfs-Ladungsträgers 6 wird der Ziel-Ladungsträger 3, auf dem sich nun der ArtikelStapel befindet, mit dem Lift 23 abgesenkt. Ist dieser auf der unteren Ebene angekommen, wird der Ziel-Ladungsträger 3 nebst Artikelstapel auf eine abführende Förderstrecke 10 in Richtung Versand übergeben.

Der Boden 9 des Hilfs-Ladungsträgers wird durch die Verschiebe- und Greifeinheit 20 wieder in die Ursprungsposition unter die Wand des Hilfs-Ladungsträgers 6 gebracht, der sich noch an der Übergabeposition befindet. Durch ein Anheben des Lastaufnahmemittels 21 der Greif- und Verschiebeeinheit 20 wird der Boden wieder mit der Umfangswand 16 des Hilfs-Ladungsträgers 6 verbunden und danach der leere Hilfs-Ladungsträger durch die Greif- und Verschiebeeinheit 20 entgegen der Überführungsrichtung Z wieder in die Übergabeposition U überführt und auf der abführenden Fördertechnik 7 zur Kommissionierstation 4 gemäß Figur 1 für eine Neubefüllung mit Artikeln 2 rücküberführt.

## Patentansprüche

1. Verfahren zum Kommissionieren von Artikeln in Form von Einzelartikeln und/oder Packungseinheiten, bei dem angeförderte Artikel gemäß den Kommissionieraufträgen auf Ziel-Ladungsträger gepackt und versandt werden, wobei die zu kommissionierenden angeförderten Artikel (2) in zumindest einer Kommissionierstation (4) auf angeförderten transportablen Hilfs-Ladungsträgern (6), die jeweils für einen Kommissionierauftrag oder einen Teil eines Kommissionierauftrags vorgesehen sind, bereits in dem Schlichtmuster des Ziel-Ladungsträgers (3) angeordnet und/oder gestapelt werden, und der Hilfs- Ladungsträger (6) nebst Artikelmenge aus Lagen und/oder Stapel(n) zu einer Beladestation (5) gefördert wird, in der die Artikelmenge als Einheit auf einen bereitgestellten positionierten Ziel-Ladungsträger (3) automatisch umgeladen wird, wobei vorzugsweise Rollcontainer und Paletten als Ziel-Ladungsträger verwendet werden, und gegebenenfalls die entladenen Hilfs-Ladungsträger (6) für ein erneutes Beladen auf einer rückführenden Fördertechnik (7) in die Kommissionierstation (4) automatisch zurückgefördert werden,
**dadurch gekennzeichnet,**
**dass** in der Beladestation (5) der auf einer zuführenden Fördertechnik (8) angeförderte Hilfs-Ladungsträger (6) nebst aufgenommener Artikelmenge an einer Umladestelle (U) unterseitig untergriffen und in eine hängende Position in einer definierten Überführungsrichtung (Z) überführt und positioniert wird, dass der Boden (11) eines bereitgestellten Ziel-Ladungsträgers (3) an die Unterseite des hängenden Hilfs-Ladungsträgers (6) angehoben wird, und dass mittels seitlicher Verschiebung des Bodens (9) des hängenden Hilfs-Ladungsträgers (6) in Überführungsrichtung (Z) die Artikelmenge auf den Ziel-Ladungsträger (3) übergeben und zusammen mit dem Ziel-Ladungsträger unter Trennung vom Hilfs-Ladungsträger nach unten in eine Abförderstellung bewegt und auf einer abfördernden Fördertechnik (10) dem Versand zugeführt wird.

2. Verfahren nach Anspruch 1,
**dadurch gekennzeichnet,**
**dass** der untergriffene Hilfs-Ladungsträger (6) nebst Artikelmenge an der Umladestelle (U) abgehoben und in Ü-berführungsrichtung (Z) horizontal bis zu einem seitlichen Anschlag (S) versetzt und durch Absenken ortsfest eingehängt und am seitlichen Anschlag (S) positioniert wird.

3. Verfahren nach Anspruch 1 oder 2,
**dadurch gekennzeichnet,**
**dass** für eine Übergabe der Artikelmenge auf den Ziel-Ladungsträger (3) der untergriffene Boden (9) des ortsfest eingehängten Hilfs-Ladungsträgers (6) nach unten aus dem eigentlichen Hilfs-Ladungsträgers herausbewegt und in Überführungsrichtung (Z) seitlich verschoben wird, und nach Übergabe der Artikelmenge auf den Ziel-Ladungsträger (3) und Trennung des Hilfs-Ladungsträgers vom Ziel-Ladungsträger durch dessen Abwärtsbewegung der Boden (9) entsprechend der Herausbewegung wieder zurück-versetzt wird.

4. Verfahren nach einem der Ansprüche 1 bis 3,
**dadurch gekennzeichnet,**
**dass** der leere ortsfest eingehängte Hilfs-Ladungsträger (6) auf die Umladestelle (U) nach Art der Überführung in Überführungsrichtung (Z) für eine Rückförderung auf der rückführenden Fördertechnik (7) zur Kommissionierstation (4) rück-überführt wird.

5. Verfahren nach einem der Ansprüche 1 bis 4,
**dadurch gekennzeichnet,**
**dass** der Kommissionierstation (4) sowohl vereinzelte Artikel (2), vorzugsweise Langsamdreher, auf erhöhten Stichbahnen (12) als auch Artikel (2) auf höhenverstellbaren Paletten (13), vorzugsweise Schnelldreher, auf einem Kommissionierfahrzeug (14) zugeführt werden, wobei die vereinzelten Artikel und die Artikel von den Paletten (13) etwa auf gleichem Höhenniveau (H) der einzelnen Artikel von einem auf dem Kommissionierfahrzeug (14) erhöht platzierten Kommissionierer (15) auf bereitgestellte Hilfs-Ladungsträger (6) etwa auf dem gleichem Höhenniveau (H) umgeladen werden.

6. Verfahren nach Anspruch 5,
**dadurch gekennzeichnet,**
**dass** das Kommissionierfahrzeug (14) mit vorzugsweise zwei Artikel-Paletten (13) auf verstellbaren Hubtischen (16) automatisch beladen wird, wobei die Artikel-Paletten vorzugsweise aus einem Palettenregallager (L) angefördert werden.

7. Beladesystem (1) zum Kommissionieren von Artikeln in Form von Einzelartikeln und/oder Packungseinheiten, bei dem angeförderte Artikel gemäß den Kommissionieraufträgen auf Ziel-Ladungsträger gepackt und versandt werden, nach einem der Ansprüche 1 bis 6, umfassend:
- zumindest eine Kommissionierstation (4) für das Kommissionieren von angeförderten Artikeln (2) auf bereitgestellten transportablen Hilfs-Ladungsträgern (6), die jeweils für einen Kommissionierauftrag oder einen Teil eines Kommissionierauftrags vorgesehen sind,
- zumindest eine Beladestation (5) für eine automatische Übergabe einer kommissionierten Artikelmenge als Einheit vom Hilfs-Ladungsträger (6) auf den Ziel-Ladungsträger (3),
**dadurch gekennzeichnet, daß** das Beladesystem die Hilfs-Ladungsträger (6) und die Ziel-Ladungsträger (3) beinhaltet, und dass das System umfasst:
- eine zuführende Förderstrecke (8) von der Kommissionierstation (4) zur Beladestation (5) für den automatischen Transport von Hilfs-Ladungsträgern (6) mit einer in Lagen angeordneten und/oder gestapelten Artikelmenge, und
- eine rückführende Förderstrecke (7) von der Beladestation (5) zur Kommissionierstation (4) für den automatischen Rück-Transport von Hilfs-Ladungsträgern (6) ohne Artikelmenge für eine erneute Kommissionierung.

8. Beladesystem nach Anspruch 7,
**dadurch gekennzeichnet,**
**dass** der Hilfs-Ladungsträger (6) ein vertikaler, oben und unten offener Schacht vorzugsweise mit geschlossener Umfangswandung (16) ist, in dem ein höhenverstellbarer Boden (9) für ein manuelles Einlegen von kommissionierten Artikeln (2) von oben in Lagen und/oder in Stapel(n) vorgesehen ist, wobei der Boden (9) in einer Tiefstellung für eine Freigabe der Artikelmenge aus dem Schacht seitlich aus dem Schacht herausschiebbar und nach der Entleerung der Artikelmenge wieder rückstellbar ist.

9. Beladesystem nach Anspruch 7 oder 8,
**dadurch gekennzeichnet,**
**dass** die Kommissionierstation (4) zwei beabstandete Reihen an Stellplätzen (17) für angeförderte und/oder rückgeförderte leere Hilfs-Ladungsträger (6) aufweist, wobei in der Gasse (G) der Stellplätze (17) ein Kommissionierfahrzeug (14) mit Kommissionierer (15) verfahrbar ist, auf dem vorzugsweise zwei aufgenommene höhenverstellbare Artikel-Paletten (13), vorzugsweise Schnelldreher, zu den Stellplätzen (17) verfahrbar sind, deren Artikel (2) durch den Kommissionierer auf Hilfs-Ladungsträger (6) kommissionierbar sind, die auf den Stellplätzen (17) abgestellt sind.

10. Beladesystem nach Anspruch 9,
**dadurch gekennzeichnet,**
**dass** die Artikel-Paletten (13) auf höhenverstellbaren Hubtischen (16) angeordnet sind, zwischen denen der Kommissionierer (15) in einer erhöhten Position (H) auf dem Kommissionierfahrzeug (14) kommissioniert.

11. Beladesystem nach Anspruch 9 oder 10,
**dadurch gekennzeichnet,**
**dass** das Kommissionierfahrzeug (14) aus der Gasse (G) der Stellplätze (17) heraus verfahrbar ist, um vorzugsweise zwei Artikel-Paletten (13) von einer Artikel-Paletten-Zuführstrecke (18) automatisch zu übernehmen und um leere oder teil-kommissionierte Paletten auf einer Paletten-Abführstrecke (19) automatisch abzugeben.

12. Beladesystem nach einem der Ansprüche 9 bis 11,
**dadurch gekennzeichnet,**
**dass** die Kommissionierstation (4) Stichbahnen (12) senkrecht zur Stellplatz-Gasse (G) aufweist, auf denen vereinzelte Artikel (2), vorzugsweise Langsamdreher, zwischen zwei Stellplätzen (17) bis zur Stellplatz-Gasse etwa auf dem Niveau (H) des oberen Endes eines Hilfs-Ladungsträgers (6) zuführbar und einem Kommissionierer (15) auf dem Kommissionierfahrzeug (14) für ein manuelles Kommissionieren auf den oder in den Hilfs- Ladungsträger (6) zugänglich ist, der vorzugsweise auf einem der Stichbahn (12) benachbarten Stellplatz (17) abgestellt ist.

13. Beladesystem nach einem der Ansprüche 7 bis 12,
**dadurch gekennzeichnet,**
**dass** die Beladestation (5) des Ziel-Ladungsträgers (3) im Warenausgangsbereich, vorzugsweise in der Versandstation, angeordnet ist.

14. Beladesysem nach einem der Ansprüche 7 bis 13,
**dadurch gekennzeichnet,**
**dass** die Ziel-Ladungsträger (3) Paletten oder Container, vorzugsweise Rollcontainer, sind.

15. Beladesystem nach einem der Ansprüche 7 bis 14,
**gekennzeichnet durch** eine Beladestation (5) mit
- einer Greif- und Verschiebeeinheit (20) mit einem gabelförmigen Lastaufnahmemittel (21) zum Untergreifen, Überführen und Positionieren eines auf der zuführenden Förderstrecke (8) angeförderten Hilfs- Ladungsträgers (6) nebst aufgenommener Artikelmenge von einer Umladestelle (U) der Förderstrecke in eine hängende Position, sowie zur Rückführung eines entleerten Hilfs- Ladungsträgers (6) auf gleichem Weg zur Umladestelle (U) für eine Abförderung zur Kommissionierstation (4) auf der rückführenden Förderstrecke (7),
- einer Halteeinheit (22) zum oberseitigen Halten des überführten Hilfs-Ladungsträgers (6) nebst Artikelmenge in der hängenden Position,
- einem Lift (23) zum Anheben und Positionieren eines bereitgestellten leeren Ziel-Ladungsträgers (3) an die Unterseite des hängenden Hilfs-Ladungsträgers (6), und
- eine Rückhaltevorrichtung (24) für einen seitlichen Anschlag (S) und ein Positionieren eines Hilfs- Ladungsträgers (6) nebst Artikelmenge bei einem seitlichen Verschieben oder Entfernen des Bodens (9) des Hilfs-Ladungsträgers (6) für eine Übergabe der Artikelmenge als Einheit auf den positionierten angehobenen Ziel-Ladungsträger (3).

## Claims

1. Process for commissioning articles in the form of single articles and/or packing units, in which conveyed articles are packed and shipped on targeted load carriers according to the commissioning orders, wherein the conveyed articles (2) to be commissioned are arranged and/or are stacked in at least one commissioning station (4) on conveyed, transportable auxiliary load carriers (6), which are each provided for a commissioning order or a part of a commissioning order, already in the loading pattern of the targeted load carrier (3), and the auxiliary load carrier (6) together with the quantity of articles from layers and/or stack(s) is conveyed to a loading station (5), in which the quantity of articles is automatically reloaded as a unit on a positioned targeted load carrier (3) that is kept ready, whereby preferably roll containers and pallets are used as targeted load carriers, and wherein the unloaded auxiliary load carriers (6), if necessary, are automatically conveyed back for a reloading onto a returning conveying means (7) into the commissioning station (4),
**characterized in that**
in loading station (5), the auxiliary load carrier (6) conveyed on a feeding conveying means (8) together with a picked-up quantity of articles is gripped from below on the underside at a reloading site (U) and is transferred and positioned into a suspended position in a defined direction of transfer (Z), that the bottom (11) of a provided targeted load carrier (3) is raised at the underside of the suspended auxiliary load carrier (6), and that the quantity of articles is transferred onto the targeted load carrier (3) by means of lateral shifting of the bottom (9) of the suspended auxiliary load carrier (6) in the direction of transfer (Z) and is moved together with the targeted load carrier, while separating from the auxiliary load carrier, downwards into a releasing position and is fed to the shipping area on a releasing conveying means (10).

2. Process in accordance with claim 1,
**characterized in that**
the auxiliary load carrier (6) together with a quantity of articles gripped from below is lifted to the reloading site (U) and offset in the direction of transfer (Z) horizontally up to a lateral stop (S) and suspended in a fixed manner by lowering and positioned at the lateral stop (S).

3. Process in accordance with claim 1 or 2,
**characterized in that**
the bottom (9), which is gripped from below, of the auxiliary load carrier (6) suspended in a fixed manner is moved downwards from the actual auxiliary load carrier for a transfer of the quantity of articles onto the targeted load carrier (3) and is displaced laterally in the direction of transfer (Z), and after transfer of the quantity of articles onto the targeted load carrier (3) and separation of the auxiliary load carrier from the targeted load carrier by the downward movement thereof, the bottom (9) is again transferred back corresponding to the outward movement.

4. Process in accordance with one of the claims 1 through 3,
**characterized in that**
the empty auxiliary load carrier (6) which is suspended in a fixed manner is transferred back to the reloading site (U) along the lines of the transfer in the direction of transfer (Z) for a conveying back on the returning conveying means (7) to the commissioning station (4).

5. Process in accordance with one of the claims 1 through 4,
**characterized in that**
both single articles (2), and preferably low-speed turners, on elevated branch terminal lines (12) and articles (2) on height-adjustable pallets (13), and preferably high-speed turners, on a commissioning vehicle (14) are fed to the commissioning station (4), whereby the single articles and the articles from the pallets (13) are reloaded approximately on the same height level (H) of the individual articles by a commissioner (15) placed in an elevated position on the commissioning vehicle (14) on provided auxiliary load carriers (6) approximately at the same height level (H).

6. Process in accordance with claim 5,
**characterized in that**
the commissioning vehicle (14) with preferably two article pallets (13) is automatically loaded on adjustable lifting tables (16), whereby the article pallets are preferably conveyed from a pallet bay storage (L).

7. Loading system (1) for commissioning articles in the form of single articles and/or packing units, in which conveyed articles are packed on targeted load carriers and shipped according to the commissioning orders, in accordance with one of the claims 1 through 6, comprising:
- at least one commissioning station (4) for the commissioning of conveyed articles (2) on transportable auxiliary load carriers (6), which are kept ready and which are each provided for a commissioning order or a part of a commissioning order, /
- at least one loading station (5) for an automatic transfer of a commissioned quantity of articles as one unit from the auxiliary load carrier (6) to the targeted load carrier (3), **characterized in that** said loading system comprising said auxiliary load carriers (6) and said targeted load carriers (3), and said system comprises:
- a feeding conveying track (8) from the commissioning station (4) to the loading station (5) for the automatic transport of auxiliary load carriers (6) with a quantity of articles arranged in layers and/or stacked, and
- a returning conveying track (7) from the loading station (5) to the commissioning station (4) for the automatic transporting back of auxiliary load carriers (6) without the quantity of articles for a new commissioning.

8. Loading system in accordance with claim 7,
**characterized in that**
the auxiliary load carrier (6) is a vertical shaft, which is open at the top and at the bottom, and preferably with a closed peripheral wall (16), in which a height-adjustable bottom (9) is provided for a manual insertion of commissioned articles (2) from above in layers and/or in stack(s), whereby the bottom (9), in a lowered position, can be pushed laterally out of the shaft for a release of the quantity of articles from the shaft and can be replaced again after emptying the quantity of articles.

9. Loading system in accordance with claim 7 or 8,
**characterized in that**
the commissioning station (4) has two spaced-apart rows of holding areas (17) for conveyed and/or returned empty auxiliary load carriers (6), wherein a commissioning vehicle (14) with commissioner (15) is displaceable in the aisle (G) of the holding areas (17), on which [the commissioning vehicle] preferably two picked-up, height-adjustable article pallets (13), and preferably high-speed turners, are displaceable to the holding areas (17), whose articles (2) can be commissioned by the commissioner on auxiliary load carriers (6), which are placed on the holding areas (17).

10. Loading system in accordance with claim 9,
**characterized in that**
the article pallets (13) are arranged on height-adjustable lifting tables (16), between which the commissioner (15) commissions in an elevated position (H) on the commissioning vehicle (14).

11. Loading system in accordance with claim 9 or 10,
**characterized in that**
the commissioning vehicle (14) is displaceable out of the aisle (G) of the holding areas (17) preferably in order to automatically take delivery of two article pallets (13) from an article pallet feed track (18) and in order to automatically release empty or partly-commissioned pallets on a pallet releasing track (19).

12. Loading system in accordance with one of the claims 9 through 11,
**characterized in that**
the commissioning station (4) has branch terminal lines (12) at right angles to the aisle (G) of holding areas, on which [lines] single articles (2), preferably low-speed turners, can be fed between two holding areas (17) up to the holding area aisle approximately on the level (H) of the upper end of an auxiliary load carrier (6) and is accessible to a commissioner (15) on the commissioning vehicle (14) for a manual commissioning on the or in the auxiliary load carrier (6), which is preferably placed on a holding area (17) adjacent to the branch terminal line (12).

13. Loading system in accordance with one of the claims 7 through 12,
**characterized in that**
the loading station (5) of the targeted load carrier (3) is arranged in the outgoing goods area, and preferably in the shipping station.

14. Loading system in accordance with one of the claims 7 through 13,
**characterized in that**
the targeted load carriers (3) are pallets or containers, and preferably roll containers.

15. Loading system in accordance with one of the claims 7 through 14,
**characterized by** a loading station (5) with
- a gripping and shifting unit (20) with a forked load pickup means (21) for gripping from below, transferring and positioning a conveyed auxiliary load carrier (6) together with a picked-up quantity of articles on the feeding conveying track (8) from a reloading site (U) of the conveying track in a suspended position, as well as for returning the emptied auxiliary load carrier (6) on the same path to the reloading site (U) for releasing to the commissioning station (4) on the returning conveying track (7),
- a holding unit (22) for the holding on the top side of the transferred auxiliary load carrier (6) together with a quantity of articles in the suspended position,
- a lift (23) for the lifting and positioning of a kept-ready, empty targeted load carrier (3) at the bottom side of the suspended auxiliary load carrier (6), and
- a retaining device (24) for a lateral stop (S) and positioning of an auxiliary load carrier (6) together with a quantity of articles with a lateral shifting or removal of the bottom (9) of the auxiliary load carrier (6) for a transfer of the quantity of articles as a unit to the positioned, raised, targeted load carrier (3).

## Revendications

1. Procédé de préparation de commandes composées d'articles sous forme d'articles individuels et/ou d'unités emballées, dans lequel les articles amenés conformément aux ordres de préparation de commandes sont emballés sur des supports de chargement cibles et expédiés, les articles (2) à préparer amenés étant déjà disposés et/ou empilés dans une unité de détection de caisse du support de chargement (3), dans au moins une station de préparation de commandes (4), sur des supports de chargement auxiliaires (6) transportables amenés respectivement prévus pour un ordre de préparation de commandes ou une partie d'un ordre de préparation de commandes et le support de chargement auxiliaire (6) étant transporté, avec la quantité d'articles composée de couches et/ou d'une ou plusieurs piles, jusqu'à une station de chargement (5) dans laquelle la quantité d'articles est automatiquement transbordée, en un bloc, sur un support de chargement cible (3) mis à disposition, des conteneurs roulants et des palettes servant de préférence de supports de chargement cibles et les supports de chargement auxiliaires (6) étant le cas échéant automatiquement ramenés dans la station de préparation de commandes (4) pour un nouveau chargement, sur un système technique de transport par voie retour (7),
**caractérisé en ce que**
dans la station de chargement (5), le support de chargement auxiliaire (6) amené sur un système technique de transport (8) en situation de marche avant est agrippé par le côté inférieur avec une quantité d'articles reçus au niveau d'un point de transbordement (U) et transféré et positionné en position accrochée dans une direction de transfert (Z) définie, que le plancher (11) d'un support de chargement (3) mis à disposition est soulevé au niveau du côté inférieur du support de chargement auxiliaire (6) accroché et que la quantité d'articles est transférée sur le support de chargement cible (3) par coulissement latéral du plancher (9) du support de chargement auxiliaire (6) accroché dans la direction de transfert (Z) et déplacée conjointement avec le support de chargement cible dans une position d'évacuation par séparation du support de chargement auxiliaire vers le bas et amenée pour expédition sur un système technique de transport (10) réalisant l'évacuation.

2. Procédé selon la revendication 1,
**caractérisé en ce que**
le support de chargement auxiliaire (6) agrippé par en bas est soulevé avec la quantité d'articles au niveau du point de transbordement (U) et décalé à l'horizontale dans la direction de transfert (Z) jusqu'à une butée latérale (S) et accroché fixement sur place par le biais d'un abaissement et positionné au niveau de la butée latérale (S).

3. Procédé selon la revendication 1 ou 2,
**caractérisé en ce que**
pour un transfert de la quantité d'articles sur le support de chargement cible (3), le plancher (9) agrippé par en bas du support de chargement auxiliaire (6) accroché fixement sur place est sorti vers le bas hors du support de chargement auxiliaire correspondant et déplacé en côté dans la direction de transfert (Z) et qu'après transfert de la quantité d'articles sur le support de chargement cible (3) et séparation du support de chargement auxiliaire par rapport au support de chargement cible, le mouvement d'extraction est réalisé de façon correspondante dans le sens inverse par réalisation d'un mouvement de retour du plancher (9).

4. Procédé selon l'une quelconque des revendications 1 à 3,
**caractérisé en ce que**
le support de chargement auxiliaire (6) libre accroché fixement sur place est ramené au point de transbordement (U) à la façon du transfert dans la direction de transfert (Z) pour un retour sur le système technique de transport par voie retour (7) jusqu'à la station de préparation de commandes (4).

5. Procédé selon l'une quelconque des revendications 1 à 4,
**caractérisé en ce que**
tant des articles (2) isolés, de préférence placés sur des systèmes de rotation lente (14), sur des voies en cul-de-sac (12) surélevées, que des articles (2) se trouvant sur des palettes (13) réglables en hauteur, de préférence des systèmes de rotation rapide, sont amenés à la station de préparation de commandes (4) sur un véhicule de préparation de commandes, les articles isolés et les articles sur palettes (13) étant transbordés approximativement au même niveau de hauteur (H), approximativement au niveau de hauteur (H) des articles individuels, pour passer d'un système de préparation de commandes (15) placé de façon surélevée sur le véhicule de préparation de commandes (14) au support de chargement auxiliaire (6) mis à disposition.

6. Procédé selon la revendication 5,
**caractérisé en ce que**
le véhicule de préparation de commandes (14) est de préférence automatiquement chargé sur des tables de levage (16) réglables avec deux palettes d'articles (13), les palettes d'articles provenant de préférence d'un dépôt de palettes (L).

7. Système de chargement (1) servant à la préparation de commandes composées d'articles sous forme d'articles individuels et/ou d'unités emballées, dans lequel les articles amenés conformément aux ordres de préparation de commandes sont emballés sur des supports de chargement cibles et expédiés, selon l'une quelconque des revendications 1 à 6, comprenant :
- au moins une station de préparation de commandes (4) servant pour la préparation de commandes d'articles (2) amenés sur des supports de chargement auxiliaires (6) transportables mis à disposition respectivement prévus pour un ordre de préparation de commandes ou une partie d'un ordre de préparation de commandes,
- au moins une station de chargement (5) servant pour le transfert automatique d'une quantité d'articles à préparer en un bloc, d'un support de chargement auxiliaire (6) au support de chargement cible (3),
**caractérisé en ce que**
le système de chargement contient les supports de chargement auxiliaires (6) et les supports de chargement cibles (3), et
le système comprend:
- un tronçon de transport (8) en situation de marche avant avançant de la station de préparation de commandes (4) vers la station de chargement (5) pour le transport automatique de supports de chargement auxiliaires (6) avec une quantité d'articles disposés en couches et/ou empilés, et
- un tronçon de transport par voie retour (7) avançant de la station de chargement (5) vers la station de préparation de commandes (4) pour le transport par voie retour automatique des supports de chargement auxiliaires (6) sans quantité d'articles en vue de réaliser une nouvelle préparation de commandes.

8. Système de chargement selon la revendication 7,
**caractérisé en ce que**
le support de chargement auxiliaire (6) est une caisse verticale ouverte en haut et en bas de préférence dotée d'une paroi périphérique (16) fermée dans lequel un plancher (9) réglable en hauteur est prévu pour permettre une insertion manuelle d'articles (2) à préparer par en haut, en couches et/ou en une ou plusieurs piles, le plancher (9) pouvant être tiré en côté de façon à ressortir de la caisse dans une position en profondeur permettant une libération de la quantité d'articles hors de la caisse et être ramené dans sa position initiale après vidage de la quantité d'articles.

9. Système de chargement selon la revendication 7 ou 8,
**caractérisé en ce que**
la station de préparation de commandes (4) comporte deux rangées espacées l'une par rapport à l'autre au niveau des emplacements (17) pour les supports de chargement auxiliaires (6) amenés et/ou ramenés vides, un véhicule de préparation de commandes (14) doté du système de préparation de commandes (15) pouvant être piloté dans le couloir (G) d'emplacements (17) et deux palettes d'articles (13) reçues, de préférence des systèmes de rotation rapide, réglables en hauteur, pouvant de préférence être amenées aux emplacements (17) sur ledit véhicule, les articles (2) desdites palettes pouvant être placés sur des supports de chargement auxiliaires (6) positionnés sur les emplacements (17) par le système de préparation de commandes.

10. Système de chargement selon la revendication 9,
**caractérisé en ce que**
les palettes d'articles (13) sont disposées sur des tables de levage (16) réglables en hauteur entre lesquelles le système de préparation de commandes (15) prépare les commandes sur le véhicule de préparation de commandes (14), dans une position (H) surélevée.

11. Système de chargement selon la revendication 9 ou 10,
**caractérisé en ce que**
le véhicule de préparation de commandes (14) est sorti du couloir (G) d'emplacements (17) pour transférer automatiquement de préférence deux palettes d'articles (13) d'un tronçon d'amenée de palettes d'articles (18) et pour ramener automatiquement les palettes vides ou en cours de préparation sur un tronçon d'évacuation de palette (19).

12. Système de chargement selon l'une quelconque des revendications 9 à 11,
**caractérisé en ce que**
la station de préparation de commandes (4) comporte des voies en cul-de-sac (12) placées perpendiculairement au couloir (G) d'emplacements sur lesquelles les articles (2) isolés peuvent être amenés sur des systèmes de rotation lente, entre deux emplacements (17), jusqu'au couloir d'emplacements, approximativement au niveau (H) de l'extrémité supérieure d'un support de chargement auxiliaire (6) et accessibles à un système de préparation de commandes (15) placé sur le véhicule de préparation de commandes (14), sur ou dans le support de chargement auxiliaire (6) placé de préférence sur un emplacement (17) connexe à la voie en cul-de-sac (12), pour une préparation manuelle de commandes.

13. Système de chargement selon l'une quelconque des revendications 7 à 12,
**caractérisé en ce que**
la station de chargement (5) du support de chargement (3) est disposée dans la zone de sortie des marchandises, de préférence dans la station d'expédition.

14. Système de chargement selon l'une quelconque des revendications 7 à 13,
**caractérisé en ce que**
les supports de chargement cibles (3) sont des palettes ou des conteneurs, de préférence des conteneurs roulants.

15. Système de chargement selon l'une quelconque des revendications 7 à 14,
**caractérisé par** la présence d'une station de chargement (5) comprenant
- une unité de préhension et de déplacement (20) dotée de moyens de réception de chargement (21) en forme de fourche permettant de prendre par en dessous, de transférer et de positionner un support de chargement auxiliaire (6) contenant une quantité d'articles reçus amené sur le tronçon de transport (8) en situation de marche avant, d'un point de transbordement (U) du tronçon de transport à une position accrochée, ainsi que de ramener un support de chargement auxiliaire (6) vide sur le même chemin jusqu'au point de transbordement (U) pour permettre le retour de la position d'évacuation jusqu'à la station de préparation de commandes (4) sur le tronçon de transport par voie retour (7),
- une unité de maintien (22) permettant de maintenir sur le côté supérieur, dans la position accrochée, le support de chargement auxiliaire (6) transféré avec la quantité d'articles,
- un système de levage (23) permettant de soulever et de positionner un support de chargement (3) vide mis à disposition au niveau du côté inférieur du support de chargement auxiliaire (6) accroché, et
- un dispositif de retenue (24) prévu pour une butée latérale (S) et un positionnement d'un support de chargement auxiliaire (6) avec la quantité d'articles en présence d'un coulissement latéral ou d'un retrait du plancher (9) du support de chargement auxiliaire (6) en vue de réaliser un transfert de la quantité d'articles en un bloc sur le support de chargement cible (3) surélevé positionné en dessous.
